# EUROPÄISCHE PATENTSCHRIFT

(11) **EP 1 753 955 B1**
(45) Veröffentlichungstag und Bekanntmachung des Hinweises auf die Patenterteilung: **14.11.2007**
(21) Anmeldenummer: 05708046.7
(22) Anmeldetag: 22.02.2005
(51) Int. Cl.: F02M 51/06, F02M 61/16, F02M 61/20, F01L 1/46, F16F 1/12

(54) **BRENNSTOFFEINSPRITZVENTIL**
FUEL INJECTION VALVE
SOUPAPE D'INJECTION DE CARBURANT

(30) Priorität: 21.05.2004 DE 102004025079
(43) Veröffentlichungstag der Anmeldung: 21.02.2007
(73) Patentinhaber: ROBERT BOSCH GMBH, 70442 Stuttgart (DE)
(72) Erfinder: REITER, Ferdinand, 71706 Markgroeningen (DE)
(86) Internationale Anmeldenummer: PCT/EP2005/050752
(87) Internationale Veröffentlichungsnummer: WO 2005/113974

(56) Entgegenhaltungen:
- DE-C1- 4 125 155
- DE-U1- 20 310 171
- US-A- 5 360 197
- US-A- 5 520 338

## Beschreibung

### Stand der Technik

Die Erfindung geht aus von einem Brennstoffeinspritzventil nach der Gattung des Hauptanspruchs.

Bei bekannten Brennstoffeinspritzventilen wird in eine Federraumöffnung eine Einstellhülse eingepreßt, an der sich eine auf das Ventilschließteil wirkende Rückstellfeder abstützt. Beim Einpressen der Einstellhülse besteht die Gefahr der Spanbildung an der Einstellhülse und an der Wandung der Federraumöffnung.

Beispielsweise ist aus der DE 41 25 155 C1 ein Brennstoffeinspritzventil bekannt, bei welchem die Rückstellfeder in eine Federraumöffnung eingepreßt und durch eine radial gerichtete Spannung in der Federraumöffnung gehalten wird. Die Einpreßtiefe der Rückstellfeder bestimmt dabei die Größe der auf das Ventilschließteil wirkenden Federkraft. Die Rückstellfeder weist dabei in einem aktiven Federbereich einen geringeren Durchmesser auf als die Federraumöffnung, während ein dem Ventilschließteil abgewandter zylindrischer Klemmbereich einen größeren Durchmesser als die Federraumöffnung hat.

Nachteilig an der aus der oben genannten Druckschrift bekannten Konstruktion mit einer selbstklemmenden Feder ist insbesondere, daß die Montagekraft sehr hoch ist. Außerdem besteht die Gefahr, daß das Federpaket bei kleinsten asymmetrisch aufgebrachten Kräften aus seiner vorgesehenen Lage verschoben werden kann und sich in der Aufnahmebohrung schief stellt. Dadurch ist die korrekte Funktion des Brennstoffeinspritzventils nicht mehr gewährleistet, da die Federkraft, mit der das Ventilschließteil beaufschlagt wird, sich verändern kann.

### Vorteile der Erfindung

Das erfindungsgemäße Brennstoffeinspritzventil mit den kennzeichnenden Merkmalen des Hauptanspruchs hat demgegenüber den Vorteil, daß im Anschluß an die federnden Windungen der Rückstellfeder mehrere Windungen so gewickelt sind, daß ihre Querschnittsfläche senkrecht zu derjenigen der federnden Windungen steht.

Dadurch kann sichergestellt werden, daß einerseits die Montagekraft, die aufgewendet werden muß, um die Rückstellfeder korrekt zu plazieren, relativ gering ist, so daß die Gefahr von Abspanungen ebenfalls gering ist. Zudem ist die Gefahr des Verkippens der Haltewindungen in der Federraumöffnung und nachfolgender Fehlfunktionen des Brennstoffeinspritzventils nicht mehr gegeben.

Durch die in den Unteransprüchen aufgeführten Maßnahmen sind vorteilhafte Weiterentwicklungen des im Hauptanspruch angegebenen Brennstoffeinspritzventils möglich.

Vorteilhafterweise sind die Haltewindungen oval oder ellipsenförmig ausgebildet.

Weiterhin ist von Vorteil, daß die Anzahl der Haltewindungen drei oder mehr beträgt.

Zudem ist vorteilhaft, daß die Breite der ovalen oder ellipsenförmigen Haltewindungen größer ist als die Federaufnahmebohrung des Brennstoffeinspritzventils, so daß eine zuverlässige Klemmwirkung gewährleistet ist.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäß ausgestalteten Brennstoffeinspritzventils in einer schematischen, teilweise geschnittenen Ansicht, und
- Fig. 2A-C: verschiedene Ansichten einer Rückstellfeder für ein erfindungsgemäß ausgestattetes Brennstoffeinspritzventil gemäß Fig. 1.

### Beschreibung des Ausführungsbeispiels

Nachfolgend wird ein Ausführungsbeispiel der Erfindung beispielhaft beschrieben. Übereinstimmende Bauteile sind dabei in allen Figuren mit übereinstimmenden Bezugszeichen versehen.

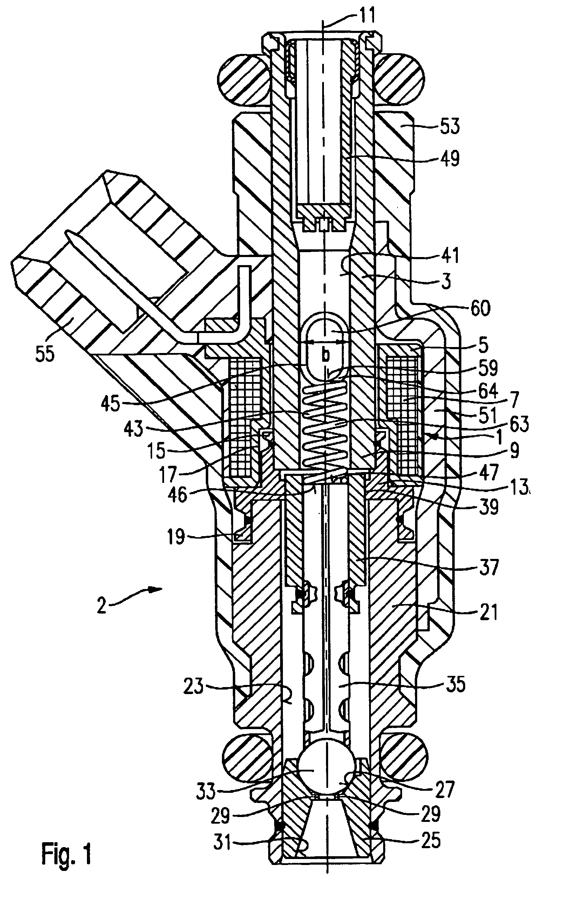

In Fig. 1 ist beispielhaft ein elektromagnetisch betätigbares Brennstoffeinspritzventil 2 für Brennstoffeinspritzanlagen von gemischverdichtenden fremdgezündeten Brennkraftmaschinen dargestellt. Das Brennstoffeinspritzventil 2 umfaßt einen von einer Magnetspule 1 umgebenen, als Brennstoffeinlaßstutzen dienenden rohrförmigen Innenpol 3. Die Magnetspule 1 weist einen in radialer Richtung gestuften Spulenkörper 5 mit einer in radialer Richtung gestufter Wicklung 7 auf und ermöglicht in Verbindung mit dem einen konstanten Außendurchmesser aufweisenden Innenpol 3 einen besonders kompakten Aufbau des Brennstoffeinspritzventils 2.

Mit einem unteren Polende 9 des Innenpols 3 ist konzentrisch zu einer Ventillängsachse 11 ein rohrförmiges Zwischenteil 13 dicht beispielsweise durch Schweißen verbunden und umgibt dabei mit einem oberen Zylinderabschnitt 15 das Polende 9 teilweise axial. Der gestufte Spulenkörper 5 übergreift teilweise den Innenpol 3 und mit einer Stufe 17 größeren Durchmessers den oberen Zylinderabschnitt 15 des Zwischenteils 13. Das Zwischenteil 13 ist an seinem dem Innenpol 3 abgewandten Ende mit einem unteren Zylinderabschnitt 19 versehen, der einen rohrförmigen Düsenhalter 21 übergreift und mit diesem beispielsweise durch Schweißen verbunden ist. In das stromabwärtsliegende Ende des Düsenhalters 21 ist in einer konzentrisch zu der Ventillängsachse 11 verlaufenden Durchgangsöffnung 23 ein zylinderförmiger Ventilsitzkörper 25 durch Schweißen dicht montiert. Der Ventilsitzkörper 25 weist der Magnetspule 1 zugewandt einen festen Ventilsitz 27 auf, stromabwärts dessen im Ventilsitzkörper 25 im Ausführungsbeispiel zwei Abspritzöffnungen 29 ausgebildet sind. Stromabwärts der Abspritzöffnungen 29 ist in dem Ventilsitzkörper 25 beispielsweise eine sich in Strömungsrichtung kegelstumpfförmig erweiternde Aufbereitungsbohrung 31 ausgebildet.

Der feste Ventilsitz 27 wirkt mit einem z.B. kugelförmigen Ventilschließteil 33 zusammen, das zum Öffnen und Schließen des Brennstoffeinspritzventils dient. Das Ventilschließteil 33 ist mit seinem dem festen Ventilsitz 27 abgewandten Ende mit einer rohrförmigen Ventilnadel 35 beispielsweise durch Schweißen verbunden. An ihrem anderen, dem Ventilschließteil 33 abgewandten Ende ist die Ventilnadel 35 mit einem rohrförmigen Anker 37 z.B. durch Schweißen verbunden. Der Anker 37 wird an seinem Umfang durch einen Führungsbund 39 des Zwischenteils 13 geführt. In eine konzentrisch zu der Ventillängsachse 11 verlaufende, durchgehende gestufte Federraumöffnung 41 des rohrförmigen Innenpols 3, die der Zufuhr des Brennstoffs in Richtung des Ventilsitzes 27 dient, ist eine Rückstellfeder 43 eingepreßt, die sich z.B. im Bereich des Polendes 9 erstreckt. Die Rückstellfeder 43 ist beispielsweise als Schraubenfeder aus einem im Ausführungsbeispiel einen kreisförmigen Querschnitt aufweisenden Draht ausgebildet. Die Rückstellfeder 43 kann z.B. aus einem Messingdraht, aus einem Federstahldraht oder aus einem beliebigen anderen Draht ausgebildet sein.

Die Rückstellfeder 43 liegt mit ihrer dem festen Ventilsitz 27 zugewandten Federstirnseite 46 an einer dem Ventilschließteil 33 abgewandten Stirnseite 47 der Ventilnadel 35 an und beaufschlagt das Ventilschließteil 33 in Richtung des festen Ventilsitzes 27. Die Einpreßtiefe der Rückstellfeder 43 in die Federraumöffnung 41 des Innenpols 3 bestimmt dabei die Federkraft der Rückstellfeder 43 und beeinflußt dadurch die dynamische, während des Öffnungs- und des Schließhubes des Brennstoffeinspritzventils 2 abgegebene Brennstoffmenge.

In der gestuften Federraumöffnung 41 des Innenpols 3 ist stromaufwärts der Rückstellfeder 43 in einer dem Polende 9 abgewandten Richtung ein Brennstofffilter 49 angeordnet. Die Magnetspule 1 ist von wenigstens einem, beispielsweise bügelförmig ausgebildeten und als ferromagnetisches Element dienenden Leitelement 51 umgeben, das die Magnetspule in Umfangsrichtung wenigstens teilweise umgibt sowie mit seinem einen Ende an dem Innenpol 3 und mit seinem anderen Ende an dem Düsenhalter 21 anliegt und mit diesem z.B. durch Schweißen oder Löten verbunden ist. Ein Teil des Brennstoffeinspritzventils 2 ist mit einer Kunststoffummantelung 53 vorzugsweise umspritzt, die sich vom Innenpol 3 ausgehend in axialer Richtung über die Magnetspule 1 und das wenigstens eine Leitelement 51 erstreckt und an die ein elektrischer Anschlußstecker 55 mit angespritzt ist.

Nachteilig an den aus dem Stand der Technik bekannten Brennstoffeinspritzventilen 2 ist insbesondere, daß die Rückstellfeder 43 zwar so konzipiert ist, daß sie in der Federraumöffnung 41 ohne zusätzliche Hülse hält, jedoch ist die zur Montage der Rückstellfeder 43 benötigte Montagekraft bedingt durch den größeren Durchmesser der Haltewindungen 45 so hoch, daß auch hier die Gefahr von Abspanungen an der Wandung der Federraumöffnung 41 zu befürchten ist. Damit entfällt der Vorteil der Einsparung der Hülse, da diese beim Einpressen in die Federraumöffnung 41 ebenfalls Abspanungen hervorruft.

In dem in Fig. 1 dargestellten Ausführungsbeispiel weist die Rückstellfeder 43 erfindungsgemäß dagegen zumindest eine an einem dem Ventilschließteil 33 abgewandten Ende 59 der Rückstellfeder 43 ausgebildete Haltewindung 45 auf, die einen größeren Außendurchmesser aufweist als der Durchmesser der Federraumöffnung 41. Dadurch liegt die Rückstellfeder 43 mit einer in radialer Richtung wirkenden Spannung an der Wandung der Federraumöffnung 41 an. Eine Querschnittsfläche 60 der zumindest einen Haltewindung 45 ist im Vergleich zu einer Querschnittsfläche 61 der Rückstellfeder 43 senkrecht ausgebildet.

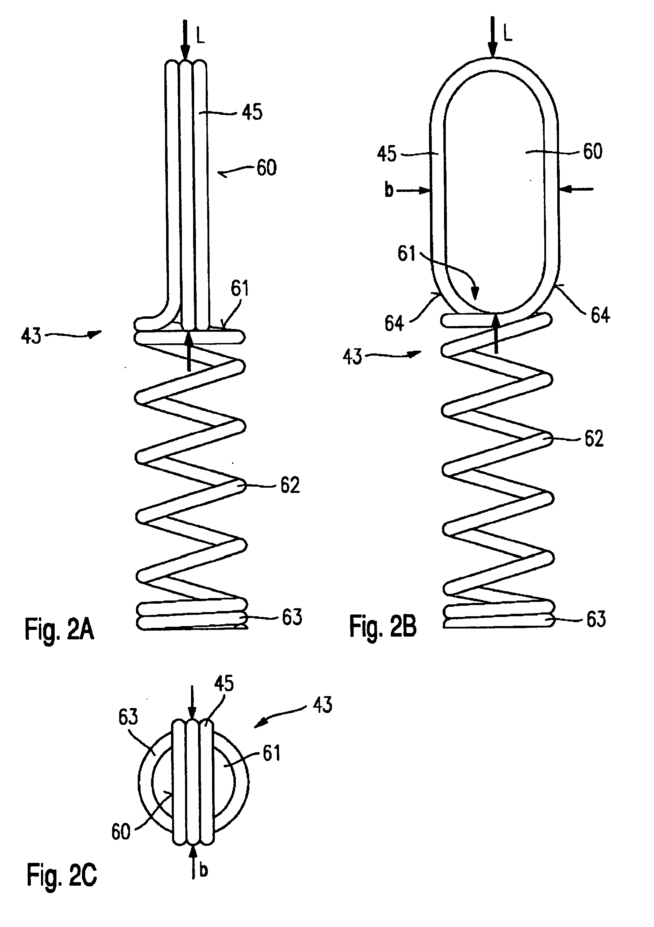

Die erfindungsgemäßen Maßnahmen sind in den Fig. 2A bis 2C und der zugehörigen Beschreibung näher erläutert.

Fig. 2A zeigt in einer schematischen Ansicht eine Rückstellfeder 43, wobei die Blickrichtung seitlich auf die im Ausführungsbeispiel drei Haltewindungen 45 gerichtet ist.

Fig. 2B zeigt eine gegenüber Fig. 2A um 90° gedrehte Ansicht der Rückstellfeder 43, in welcher eine ovale oder ellipsenförmige Wickelform der Haltewindungen 45 erkennbar ist. Eine Breite b der Haltewindungen 45 ist dabei im entspannten Zustand der Haltewindungen 45 im unmontierten Zustand der Rückstellfeder 43 größer als der Durchmesser der Federraumöffnung 41. Bei der Montage der Rückstellfeder 43 in der Federraumöffnung 41 werden die Haltewindungen 45 plastisch-elastisch verformt und dabei in der Federraumöffnung 41 verspannt, wodurch sie die Federkraft ohne weitere Einstellhülse aufnehmen können.

Fig. 2C zeigt in einer Aufsicht mit Blickrichtung in Strömungsrichtung des Brennstoffs die Rückstellfeder 43 sowie die Haltewindungen 45. Aus Fig. 2C ist ersichtlich, daß die Haltewindungen 45 zentriert über dem Querschnitt 61 der Rückstellfeder 43 angeordnet sind. Weiterhin ist der größere Außendurchmesser b der Haltewindungen 45 erkennbar.

Eine gemäß Fig. 2A bis 2C ausgebildete Rückstellfeder 43 weist verschiedene Vorteile auf. Zunächst entfällt eine separate Einstellhülse. Weiterhin können die Haltewindungen 45 unter Belastung nicht verkippt werden, sondern liegen stabil an der Wandung der Federraumöffnung 41 an. Durch eine geeignete Gestaltung der Haltewindungen 45, beispielsweise durch eine Anpassung der Anzahl, der Breite b sowie einer Länge L der Haltewindungen 45, kann die Haltekraft in einfacher Weise an die Erfordernisse angepaßt werden.

Weiterhin ist von Vorteil, daß die Feder bei Bedarf mittels eines Hakens problemlos wieder aus der Federraumöffnung 41 entfernt werden kann. Dies ist bei herkömmlichen Rückstellfedern 43 beispielsweise gemäß dem Stand der Technik nicht oder nur unter Schwierigkeiten möglich. Bedingt durch die ausgeprägte Asymmetrie der Rückstellfeder 43 ist eine automatische Zuführung bei der Montage leicht möglich. Weiterhin kann Spanbildung verhindert werden, da der runde Federdraht der Rückstellfeder 43 nur in einer Erstreckungsrichtung der Haltewindungen 45 mit der Wandung der Federraumöffnung 41 in Kontakt tritt.

Wie aus Fig. 2A und 2B ersichtlich, weist ein federnder Teil 62 der Rückstellfeder 43 beidseitig beispielsweise zwei aneinander anliegende Abschlußwindungen 63 auf, um zu verhindern, daß sich die Rückstellfedern 43 bei der Herstellung als Schüttgut verhaken. Zudem stellen die Abschlußwindungen 63 sicher, daß die Einstell- und Federkraft aus den Haltewindungen 45 in axialer Richtung ohne seitliche Versätze übertragen werden können.

Weiterhin kann am Übergang der federnden Windungen 62 zu den Haltewindungen 45 eine Einführschräge 64 ausgeführt sein, um das Einführen der Rückstellfeder 43 in die Federraumöffnung 41 zu erleichtern und Spanbildung zu verhindern.

Die Erfindung ist nicht auf das dargestellte Ausführungsbeispiel beschränkt und für beliebige Bauformen von Brennstoffeinspritzventilen 2 anwendbar. Insbesondere sind beliebige Kombinationen der verschiedenen Merkmale möglicht, soweit sie vom Gegenstand der beiliegenden Ansprüche abgedeckt sind.

## Patentansprüche

1. Brennstoffeinspritzventil (2) für Brennstoffeinspritzanlagen von Brennkraftmaschinen, mit einem Ventilschließteil (33), das mit einem Ventilsitz (27) zusammenwirkt, und einer in einer Federraumöffnung (41) angeordneten Rückstellfeder (43), die das Ventilschließteil (33) in Richtung des Ventilsitzes (27) mit einer Rückstellkraft beaufschlagt,
**dadurch gekennzeichnet,**
**daß** die Rückstellfeder (43) in einem zuströmseitigen Bereich zumindest eine Haltewindung (45) aufweist, deren Querschnittsfläche (60) senkrecht zu derjenigen (61) der anderen federnden Windungen der Rückstellfeder (43) steht.

2. Brennstoffeinspritzventil nach Anspruch 1,
**dadurch gekennzeichnet,**
**daß** die Anzahl der Haltewindungen (45) mindestens drei beträgt.

3. Brennstoffeinspritzventil nach Anspruch 1 oder 2,
**dadurch gekennzeichnet,**
**daß** die Querschnittsfläche (60) der zumindest einen Haltewindung (45) oval oder ellipsenförmig ist.

4. Brennstoffeinspritzventil nach einem der Ansprüche 1 bis 3,
**dadurch gekennzeichnet,**
**daß** eine Breite (b) der zumindest einen Haltewindung (45) im unmontierten Zustand der Rückstellfeder (43) größer ist als ein Innendurchmesser der Federraumöffnung (41).

5. Brennstoffeinspritzventil nach Anspruch 4,
**dadurch gekennzeichnet,**
**daß** die zumindest eine Haltewindung (45) im montierten Zustand in der Federraumöffnung (41) plastisch-elastisch verformt ist.

6. Brennstoffeinspritzventil nach einem der Ansprüche 1 bis 5,
**dadurch gekennzeichnet,**
**daß** federnde Windungen (62) der Rückstellfeder (43) beidseitig zumindest zwei aneinander anliegende Abschlußwindungen (63) aufweisen.

7. Brennstoffeinspritzventil nach Anspruch 6,
**dadurch gekennzeichnet,**
**daß** sich die zumindest eine Haltewindung (45) an den Abschlußwindungen (63) der federnden Windungen (62) abstützt.

8. Brennstoffeinspritzventil nach Anspruch 6 oder 7,
**dadurch gekennzeichnet,**
**daß** zwischen den federnden Windungen (62) und der zumindest einen Haltewindung (45) eine Einführschräge (64) ausgebildet ist.

## Claims

1. Fuel injection valve (2) for fuel injection systems of internal combustion engines, having a valve closing part (33) which interacts with a valve seat (27), and a restoring spring (43) which is arranged in a spring-space opening (41) and loads the valve closing part (33) with a restoring force in the direction of the valve seat (27), **characterized in that** the restoring spring (43) has at least one holding turn (45) in an inflow-side region, the cross-sectional area (60) of which holding turn (45) lies perpendicularly with respect to that (61) of the other resilient turns of the restoring spring (43).

2. Fuel injection valve according to Claim 1, **characterized in that** the number of holding turns (45) is at least three.

3. Fuel injection valve according to Claim 1 or 2, **characterized in that** the cross-sectional area (60) of the at least one holding turn (45) is oval or ellipsoid.

4. Fuel injection valve according to one of Claims 1 to 3, **characterized in that**, in the unassembled state of the restoring spring (43), a width (b) of the at least one holding turn (45) is greater than an internal diameter of the spring-space opening (41).

5. Fuel injection valve according to Claim 4, **characterized in that** the at least one holding turn (45) is plastically/elastically deformed in the assembled state in the spring-space opening (41).

6. Fuel injection valve according to one of Claims 1 to 5, **characterized in that** resilient turns (62) of the restoring spring (43) have, on both sides, at least two terminating turns (63) which bear against one another.

7. Fuel injection valve according to Claim 6, **characterized in that** the at least one holding turn (45) is supported on the terminating turns (63) of the resilient turns (62).

8. Fuel injection valve according to Claim 6 or 7, **characterized in that** an insertion bevel (64) is formed between the resilient turns (62) and the at least one holding turn (45).

## Revendications

1. Injecteur de carburant (2) pour des installations d'injection de carburant de moteurs à combustion comportant une partie d'obturation de soupape (33) coopérant un siège de soupape (27) et un ressort de rappel (43) logé dans une ouverture formant chambre de ressort (41), et sollicitant la pièce d'obturation de soupape (33) en direction du siège de soupape (27) avec une force de rappel,
**caractérisé en ce que**
le ressort de rappel (43) présente, dans sa zone côté alimentation, au moins une boucle de retenue (45) dont la surface de la section (60) est perpendiculaire à celle (61) des autres spires élastiques du ressort de rappel (43).

2. Injecteur de carburant selon la revendication 1,
**caractérisé en ce que**
le nombre de spires de retenue (45) est au moins égal à trois.

3. Injecteur de carburant selon l'une quelconque des revendications 1 ou 2,
**caractérisé en ce que**
la surface (60) de la section d'au moins une boucle de retenue (45) est de forme ovale ou elliptique.

4. Injecteur de carburant selon l'une quelconque des revendications 1 à 3,
**caractérisé en ce que**
la largeur (b) d'au moins une boucle de retenue (45) à l'état non installé du ressort de rappel (43) est supérieure au diamètre intérieur de l'ouverture de la chambre à ressort (41).

5. Injecteur de carburant selon la revendication 4,
**caractérisé en ce qu'**
au moins la boucle de retenue (45) à l'état monté dans l'ouverture de la chambre de ressort (41) est déformable de manière plastique-élastique.

6. Injecteur de carburant selon l'une quelconque des revendications 1 à 5,
**caractérisé en ce que**
les spires élastiques (62) du ressort de rappel (43) ont des deux côtés, au moins deux spires de terminaison (63), jointives.

7. Injecteur de carburant selon la revendication 6,
**caractérisé en ce qu'**
au moins une boucle de retenue (45) s'appuie contre les spires de terminaison (63) des spires élastiques (62).

8. Injecteur de carburant selon l'une quelconque des revendications 6 ou 7,
**caractérisé par**
au moins une rampe d'introduction (64) entre les spires élastiques (62) et au moins une boucle de retenue (45).
